(19) Europäisches Patentamt
European Patent Office
Office européen des brevets

(11) **EP 4 264 242 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **21839024.3**

(22) Anmeldetag: **08.12.2021**

(51) Internationale Patentklassifikation (IPC):
***G01N 22/00*** *(2006.01)*

(52) Gemeinsame Patentklassifikation (CPC):
**G01N 22/00;** G01N 22/04

(86) Internationale Anmeldenummer:
**PCT/EP2021/084803**

(87) Internationale Veröffentlichungsnummer:
**WO 2022/135936 (30.06.2022 Gazette 2022/26)**

(54) **VERFAHREN ZUR MESSUNG VON STOFFMENGEN IN EINEM STOFFGEMISCH**

METHOD FOR MEASURING SUBSTANCE QUANTITIES IN A SUBSTANCE MIXTURE

PROCÉDÉ DE MESURE DE QUANTITÉS DE SUBSTANCES DANS UN MÉLANGE DE SUBSTANCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020 DE 102020134372**

(43) Veröffentlichungstag der Anmeldung:
**25.10.2023 Patentblatt 2023/43**

(73) Patentinhaber: **TEWS Elektronik GmbH & Co. KG**
**22459 Hamburg (DE)**

(72) Erfinder:
• **RICHTER, Hendrik**
**20255 Hamburg (DE)**
• **SCHLEMM, Udo**
**22607 Hamburg**
**(DE)**

(74) Vertreter: **Hauck Patentanwaltspartnerschaft mbB**
**Postfach 11 31 53**
**20431 Hamburg (DE)**

(56) Entgegenhaltungen:
**EP-A1- 1 669 755       EP-A2- 2 207 027**
**DE-A1- 102011 006 416     DE-B3- 102016 114 286**

• **AUSTIN JOHN ET AL: "A novel microwave sensor to determine particulate blend composition on-line", ANALYTICA CHIMICA ACTA, ELSEVIER, AMSTERDAM, NL, vol. 819, 15 February 2014 (2014-02-15), pages 82 - 93, XP028631230, ISSN: 0003-2670, DOI: 10.1016/J.ACA.2014.02.016**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Messung von Stoffmengen in einem Stoffgemisch mit zwei Stoffen unter Verwendung eines Mikrowellenresonators.

Die vorliegende Erfindung schafft die Möglichkeit zur Messung von Stoffmengen zweier nicht- oder schwach-dispersiver Stoffe in einem Stoffgemisch mit Hilfe der Mikrowellen-Resonanzmethode. Bei einer Mischung von zwei feuchten Stoffen ist grundsätzlich das Messen von Stoffmengen bei Anwendung eines Zwei-Parameter-Verfahrens unterbestimmt. Die Feuchte kann also nicht unabhängig von schwankenden Stoffanteilen in dem Gemisch bestimmt werden. Bei einer Messung mit einem Mikrowellenresonator in einem Stoffgemisch ist es also erforderlich, dass einer der Stoffanteile konstant bleibt, beispielsweise der Probenbehälter oder ein Substrat für den zweiten Stoff. Der Einfluss des konstanten Stoffanteils kann dann in der Regel aus den Messwerten beispielsweise über ein Offset eliminiert werden.

Aus dem Stand der Technik ist DE 10 2011 006 416 bekannt, das die Bestimmung der Feuchtigkeit und Materialzusammensetzung eines Stoffgemisches in einem Zigarettenfilterstrang mit Hilfe einer Mikrowellenmesseinrichtung betrifft.

Mit der vorliegenden Erfindung soll das Messproblem adressiert werden, dass relativ stark schwankende Anteile der beiden Stoffe in dem Stoffgemisch vorliegen, gleichzeitig aber die Feuchte entweder nur relativ schwach bzw. nicht schwankt oder die Feuchte der einzelnen Stoffe vorab gemessen wird. Ein einfache Plausibilitätsüberlegung zeigt, dass, ausgehend von zwei Messwerten des Mikrowellenresonators, die Messaufgabe zwei Stoffmengen in dem Stoffgemisch zu bestimmen, nicht unterbestimmt ist.

Der Erfindung liegt die Aufgabe zugrunde, zur Messung von Stoffmengen in einem Stoffgemisch mit zwei Stoffen, ein Verfahren unter Verwendung eines Mikrowellenresonators bereitzustellen.

Erfindungsgemäß wird die Aufgabe durch ein Verfahren mit den Merkmalen aus Anspruch 1 gelöst. Vorteilhafte Ausgestaltung bilden die Gegenstände der Unteransprüche.

Das erfindungsgemäße Verfahren liefert zwei Stoffmengen für ein Stoffgemisch. Bei den Stoffen muss es sich nicht um chemisch reine Stoffe handeln, sondern es werden Stoffe und ihre Stoffmengen in dem Stoffgemisch bestimmt. Indem das erfindungsgemäße Verfahren nicht auf reine Stoffe beschränkt ist, können auch in einem Stoffgemisch mit mehr als zwei Stoffen die Stoffmengen von zwei Stoffgruppen voneinander unterschieden werden.

Das erfindungsgemäße Verfahren geht zunächst von dem Bestimmen eines ersten Feuchtewerts für einen ersten der zwei Stoffe und einem zweiten Feuchtewert für den zweiten der beiden Stoffe aus. Der Feuchtewert für einen Stoff ist in der Mikrowellenmesstechnik eine gebräuchliche Größe, die beispielsweise aus dem Quotienten der beiden Messgrößen des Mikrowellenresonators bestimmt wird. In einem nachfolgenden Schritt werden zwei Messwerte für das Stoffgemisch mit dem Mikrowellenresonator bestimmt. Hierbei werden als Messgrößen die Verschiebung der Resonanzfrequenz und die Verbreiterung der Resonanzkurve bestimmt.

Unter Verwendung des ersten und des zweiten Feuchtewerts werden zwei Skalarfaktoren für zwei Feuchtevektoren aus den beiden Messwerten für das Stoffgemisch berechnet. Die Feuchtevektoren sind dabei Vektoren, die in einer Ebene der Messwerte unter Verwendung des ersten und des zweiten Feuchtewerts jeweils die Richtung einer Geraden gleicher Feuchte für einen Stoff angeben. Die Feuchtevektoren bezeichnen also jeweils für einen Stoff die Richtung in der Ebene der Messwerte, in der der Feuchtewert konstant ist.

In einem weiteren Schritt werden die Stoffmengen aus den beiden Skalarfaktoren bestimmt. Der letzte Schritt zeigt, dass das Messproblem nicht unterbestimmt ist. Die Genauigkeit, die mit dem erfindungsgemäßen Messverfahren erzielt werden kann, hängt wesentlich davon ab, wie schwach die Feuchte der beiden Stoffanteile schwanken oder wie gut die Feuchte der beiden Stoffanteile bekannt ist. Analytische Rechnungen der Erfinder haben gezeigt, dass stark unterschiedliche Feuchtewerte für die beiden Stoffe sich zudem positiv auf die Messgenauigkeit auswirken. Die erzielte Genauigkeit bei der Bestimmung der Stoffmenge ist überraschend insofern, als mit dem Mikrowellenresonator das Stoffgemisch gemessen wird.

In einer bevorzugten Ausgestaltung erfolgt das Bestimmen der Stoffmengen abhängig von den Skalarfaktoren und einer Temperatur für das Stoffgemisch. Versuche haben gezeigt, dass die Temperatur des Stoffgemischs zusätzlich zu den Skalarfaktoren eine Bestimmungsgröße ist, die in der praktischen Anwendung leicht zugänglich ist und einen Beitrag zur Erhöhung der Messgenauigkeit liefert.

Für eine Bestimmung des Zusammenhangs der Stoffmengen mit den Skalarfaktoren, wird auf eine Vielzahl von Messungen zurückgegriffen, die dann entsprechend ausgewertet werden.

In einer bevorzugten Ausgestaltung des erfindungsgemäßen Verfahrens hat es sich gezeigt, dass für den Zusammenhang zwischen den Stoffmengen und den Skalarfaktoren angenommen werden kann, dass die Stoffmenge des ersten Stoffs von dem Skalarfaktor des Feuchtewerts für den ersten Stoff und die Stoffmenge des zweiten Stoffs abhängig von dem Skalarfaktor des Feuchtewerts des zweiten Stoffs abhängt. Diese Unabhängigkeit der beiden Stoffe in dem Stoffgemisch erleichtert die Bestimmung der Skalarfaktoren. Im Hinblick auf die Feuchtewerte für die beiden Stoffe kann, insbesondere bei konstanter oder wenig schwankender Feuchte für die beiden Stoffe, vorab ein Kalibrationsschritt durchgeführt werden. Mit diesem Kalibrationsschritt werden dann die Feuchtewerte für die beiden Stoffe in dem Stoffgemisch möglichst genau bestimmt.

Alternativ oder zusätzlich zu dem Kalibrationsschritt für die Feuchtewerte ist es auch möglich, mindestens ein weiteres Messsystem vorzusehen, das den Feuchtewert für einen Stoff vor der Mischung mit dem anderen Stoff misst. Auf diese Weise liegt dann einer der Feuchtewerte bei dem Messverfahren exakt vor. In einer bevorzugten Ausgestaltung können zwei weitere Messsysteme vorgesehen sein, die jeweils einen Feuchtewert für einen Stoff messen. Bei dieser Ausgestaltung kann das erfindungsgemäße Verfahren dann auch bei Stoffgemischen angewendet werden, bei denen die Feuchtewerte der das Stoffgemisch bildenden Stoffe stark schwanken. Mit der präzisen Erfassung der Feuchtewerte für die einzelnen Stoffe, können die aus der Messung an dem Stoffgemisch sich ergebenden Schwankungen der Messwerte eindeutig auf die Änderungen in der Stoffmenge zurückgerechnet werden. Als vorteilhaft hierbei hat es sich herausgestellt, dem Umstand, dass zwei oder mehr Messsysteme eingesetzt werden, dadurch Rechnung zu tragen, dass die Feuchtewerte des oder der weiteren Messsysteme umskaliert werden. Die Skalierungsfaktoren können dabei vorab in einem Kalibrationsschritt bestimmt werden.

Eine bevorzugte Ausgestaltung der Erfindung wird nachfolgend an einem Ausführungsbeispiel näher erläutert. Es zeigen:

Fig. 1a, b      die Darstellung der Messwerte in einer A-B-Ebene und die zugehörigen Feuchtevektoren,

Fig. 2      eine Messanordnung zur vorherigen Messung der Feuchtewert,

Fig. 3      ein A-B-Diagramm für die Mittelwerte von 12 Proben mit einem Zellulosevlies sowie mit einer SAP-Schicht,

Fig. 4      ein beispielhaftes Profil der A-, B-Werte,

Fig. 5      das Profil der A-,B-Werte aufgeteilt in $\theta$-Werte,

Fig. 6      die Kalibration der Flächenmasse,

Fig. 7      ein Längsprofil für SAP und Zellulose mit der Flächenmasse, und

Fig. 8      eine alternative Darstellung des Profils mit A- und $\varphi$- Werten.

Für ein besseres Verständnis der Erfindung ist es hilfreich, einen kurzen Blick auf die physikalischen Grundlagen zu werfen. Bei der Verwendung von Mikrowellenresonatoren im Bereich der Feuchtemesstechnik fallen zwei Messgrößen A und B an. Die Messgröße A bezeichnet hierbei die Veränderung der Resonanzfrequenz in Form einer Verschiebung der Resonanzfrequenz. Die zweite Messgröße B beschreibt die Veränderung der Breite der Resonanzkurve. Physikalische Grundlage für die Messgröße A bildet die Verkürzung der Wellenlänge durch die dielektrischen Eigenschaften des zu messenden Stoffs. Der zweite Effekt, der zur Messgröße B führt, beschreibt die Absorption der Mikrowellen in der zu vermessenden Probe.

Die Polarisation P eines dielektrischen Messguts ergibt sich bei einem elektrischen Feld E entsprechend seiner Suszeptibilität $\chi_e$ und der Permittivität des Vakuums $\varepsilon_0$.

$$\vec{P} = \chi_e \cdot \varepsilon_0 \cdot \vec{E}.$$

Die elektrische Suszeptibilität ist eine komplexe Zahl, deren Realteil mit $\chi_e'$ und deren Imaginärteil mit $\chi_e''$ bezeichnet sei.

$$\chi_e = \chi_e' - i \cdot \chi_e''.$$

Für den Zusammenhang mit den Messgrößen A und B des Mikrowellenresonators ergibt sich die Suszeptibilität, dass die Messgröße A proportional $\chi_e'$ und die Messgröße B proportional zu $\chi_e''$ ist.

$$A \propto \chi_e' = \varepsilon' - 1$$

und

$$B \propto \chi_e'' = \varepsilon'',$$

wobei $\varepsilon'$ den Realteil der relativen Permittivität und $\varepsilon''$ deren Imaginärteil bezeichnet.

Für die Materialmischung von mehreren Materialien $M_1$ bis $M_N$ ergibt sich die elektrische Suszeptibilität als Summe der elektrischen Suszeptibilitäten der Materialien:

$$\chi_{e,Mischung} = \chi_{e,M_1} + \chi_{e,M_2} + \cdots + \chi_{e,M_{1N}}$$

Dieses Verhalten der elektrischen Suszeptibilität für das Stoffgemisch führt dazu, dass sich die Mikrowellenmesswerte additiv zueinander verhalten. Dies bedeutet, der A-Wert eines Gemischs ist die Summe der A-Werte der einzelnen Stoffe in dem Gemisch. Ebenso ist der B-Wert die Summe der einzelnen B-Werte der Stoffe in dem Gemisch.

$$A_{Mischung} = A_{M_1} + A_{M_2} + \cdots + A_{M_N}$$

und

$$B_{Mischung} = B_{M_1} + B_{M_2} + \cdots + B_{M_N}$$

Im weiteren Verlauf werden Stoffgemische, bestehend aus zwei Stoffen betrachtet. Grundsätzlich können auch Stoffgemische mit mehr als zwei Stoffen analysiert und dann einige Stoffe zusammengefasst werden und gemeinsam als ein Stoff betrachtet werden.

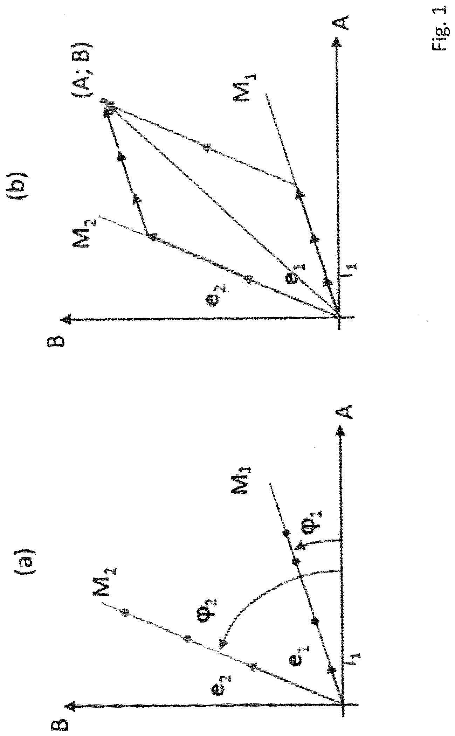

Figur 1 zeigt die von den Messwerten A, B aufgespannte Ebene. Die Linien gleicher Feuchte sind für die Stoffe $M_1$ und $M_2$ eingezeichnet. Die Steigung der Geraden gleicher Feuchte wird durch den Feuchtewert $\varphi_1$, $\varphi_2$ bezeichnet. Die in den vorstehenden Gleichungen für die A- und B-Werte der Mischung ausgedrückte Addition der Werte führt, grafisch dargestellt wie in Figur 1b, zu einer vektoriellen Addition der beiden Größen. Dies bedeutet, die Messwerte A und B für das Gemisch können als vektorielle Addition der Feuchtewerte der Stoffe $M_1$ und $M_2$ bestimmt werden. Um diese Überlagerung in dem Stoffgemisch besser analysieren zu können, ist es vorteilhaft, die Feuchtevektoren Vektor $e_1$, Vektor $e_2$ einzuführen. Jeder Punkt auf der Linie mit konstanter Feuchte kann damit durch den Skalarfaktor $\theta$ multipliziert mit dem Feuchteeinheitsvektor dargestellt werden.

$$\begin{pmatrix} A_i \\ B_i \end{pmatrix} = \theta_i \cdot e_i$$

Der Index i in vorstehender Gleichung steht dabei für die Stoffe 1 und 2.

Der vorstehende Zusammenhang gilt selbstverständlich nicht für Wasser oder für andere stark dispersive Materialien, wie beispielsweise Glycerin. Für solche stark dispersiven Stoffe liegen die Werte konstanter Feuchte nicht auf einer Geraden.

Gehen wir dahin zurück, dass für das Gemisch der A-Wert sich als Summe der A-Werte der Stoffe ergibt und der B-Wert sich als Summe der B-Werte der Stoffe ergibt, so kann dieser Zusammenhang in vektorieller Schreibweise wie folgt dargestellt werden:

$$\begin{pmatrix} A \\ B \end{pmatrix} = \begin{pmatrix} A_{M_1} \\ B_{M_1} \end{pmatrix} + \begin{pmatrix} A_{M_2} \\ B_{M_2} \end{pmatrix} = \theta_1 \cdot e_1 + \theta_2 \cdot e_2$$

Verzichtet man auf eine Normierung der Feuchtevektoren, so besitzen diese jeweils die Koordinatendarstellung.

$$e_i = \begin{pmatrix} 1 \\ tan(\varphi_i) \end{pmatrix}$$

Hiervon ausgehend können nun die Messwerte A, B für das Stoffgemisch kompakt geschrieben werden:

$$\binom{A}{B} = \theta_1 \cdot e_1 + \theta_2 \cdot e_2 = \begin{pmatrix} e_1 & e_2 \end{pmatrix} \cdot \binom{\theta_1}{\theta_2} = \begin{pmatrix} 1 & 1 \\ tan(\varphi_1) & tan(\varphi_2) \end{pmatrix} \cdot \binom{\theta_1}{\theta_2}$$

Unter der Bedingung, dass $\varphi_1$ ungleich $\varphi_2$ ist, kann das vorliegende Gleichungssystem invertiert werden. In seiner invertierten Form ergibt sich folgender Zusammenhang:

$$\binom{\theta_1}{\theta_2} = \frac{1}{tan(\varphi_2) - tan(\varphi_1)} \cdot \begin{pmatrix} tan(\varphi_2) & -1 \\ -tan(\varphi_1) & 1 \end{pmatrix} \cdot \binom{A}{B}$$

Die vorstehende Gleichung bildet einen zentralen Aspekt des erfindungsgemäßen Messverfahrens.

Aus den in dem Gemisch gemessenen A-, B-Werten können unter Verwendung der Feuchtewerte $\varphi_1$, $\varphi_2$ die Skalarfaktoren $\theta_1$, $\theta_2$ berechnet werden. Die vorstehende Formel macht auch deutlich, dass entweder die Feuchtewerte $\varphi_1$, $\varphi_2$ während des Vorgangs als konstant oder wenig schwankend angenommen werden. In diesem Fall können die $\varphi_1$- und $\varphi_2$-Werte im Vorfeld bestimmt und für die Auswertung verwendet werden.

Sollten bei einer Messanwendung dagegen stark schwankende Feuchtewerte für die Stoffe vorliegen, so können diese fortlaufend gemessen werden. Der Vorteil des vorstehenden Zusammenhangs zwischen den Skalarfaktoren und den Messungen am Gemisch ist, dass dieser Ausdruck als analytischer Ausdruck es zulässt, dass die gemessenen Feuchtewerte $\varphi_1$ und $\varphi_2$ direkt eingesetzt und so ausgewertet werden. Die bestimmten Skalarfaktoren erlauben es nun, zuverlässig die Stoffmengen $m_1$, $m_2$ zu bestimmen. Vernachlässigen wir zunächst die Temperaturabhängigkeit, so kann hier ein linearer Ansatz gewählt werden:

$$m_i = \alpha_i \cdot \theta_i + \beta_i$$

Hierbei bezeichnen die Parameter $\alpha$, $\beta$ den Zusammenhang zwischen dem Skalarfaktor und der Stoffmenge. Grundsätzlich können die Parameter $\alpha$, $\beta$ temperaturabhängig gewählt werden. Es hat sich herausgestellt, dass die Temperaturabhängigkeit auch direkt linear berücksichtigt werden kann. Damit ergibt sich folgender Zusammenhang:

$$m_i = \alpha_i \cdot \theta_i + \beta_{1,i} \cdot T + \beta_{2,i}.$$

Auswertungen von Messungen an Stoffgemischen, wie beispielsweise die Messung von Zellulose- und Superabsorbergehalt in Windelkernen. Die Bestimmung des Mischungsverhältnisses von Garnen mit Kunst- und Naturfasern, ebenso wie die Bestimmung von Aktivkohle und anderen Granulaten in Zigarettenfiltern haben gezeigt, dass die Bestimmung der Stoffmenge über die Skalarfaktoren ein hochgenaues Verfahren darstellt. Qualitativ kann dies plausibel gemacht werden, wenn man berücksichtigt, dass der Feuchtewert $\varphi$ dichteunabhängig ist. Dieser dichteunabhängige Wert geht in den Feuchtevektor $e$ ein, sodass die dichteabhängigen Einflüsse auf die Messgrößen A, B sich verstärkt in den Skalarfaktoren ausdrücken. Auf diese Weise ist die Bestimmung der Skalarfaktoren aus den gemessenen A-, B-Werten für das Gemisch ein zuverlässiger Anteil, der eine Bestimmung der Stoffmengen erlaubt. Trotz dieser qualitativen Überlegung ist die erzielte Genauigkeit bei der Bestimmung überraschend.

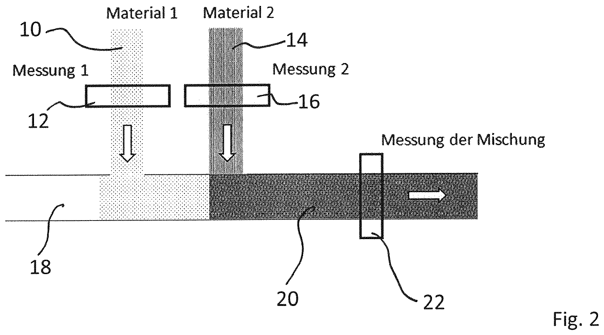

In Messsituationen, in denen die Feuchtewerte $\varphi_1$, $\varphi_2$ für die Stoffe nicht genau im Vorfeld bestimmt werden können oder aufgrund der Messsituation schwanken, kann die in Figur 2 dargestellte Messanordnung eingesetzt werden. Die Messanordnung in Figur 2 zeigt in einer schematischen Ansicht einen Materialstrom 10 zu dem Material $M_1$. Die Feuchte zu dem Materialstrom $M_1$ wird mit einer schematisch dargestellten Messeinrichtung 12 gemessen. Ebenso wird für den Materialstrom 14 des Materials $M_2$ mit einer Messeinrichtung 16 der Feuchtewert $\varphi_2$ gemessen. Beide Materialien $M_1$, $M_2$ werden einer Zuführung 18 zugeführt, wo sie stromabwärts der Zufuhr des zweiten Materials 14 zu einem Gemisch 20 werden. Das Gemisch 20 wird in einer Messanordnung 22 gemessen. Die so bestimmten A- und B-Werte können dann in die Skalarfaktoren $\theta_1$ und $\theta_2$ umgerechnet werden. Aufgrund der stets aktuell vorliegenden Feuchtewerte $\varphi_1$, $\varphi_2$ können die Skalarfaktoren direkt umgerechnet werden.

Wenn die Feuchtewinkel mit separaten Messeinrichtungen 12, 16 bestimmt werden, hat es sich als vorteilhaft erwiesen, die entsprechenden Feuchtewerte vor einer Verarbeitung noch umzurechnen.

$$tan(\varphi_1) = a_1 \cdot tan(\varphi'_1) + b_1$$

und

$$tan(\varphi_2) = a_2 \cdot tan(\varphi'_2) + b_2$$

Dabei sind die gestrichenen Feuchtewinkel die Feuchtewinkel der einzelnen Geräte 12, 16 vor der Mischung. Die Parameter ai, bi werden in an sich bekannter Weise kalibriert.

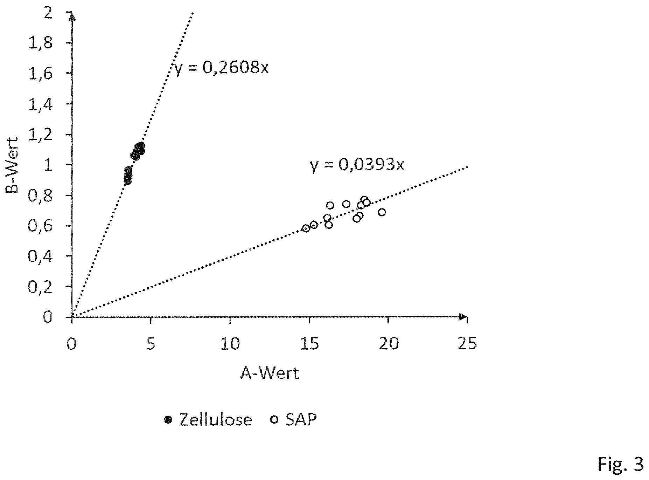

Die vorstehende Analyse wird nachfolgend an einem konkreten Beispiel mit 12 Proben eines Zellulosevlieses sowie für 12 Proben einer SAP-Schicht (Schicht mit Superabsorberpulver) wiederholt. In der A-,B-Ebene sind die Mittelwerte der Messung eingetragen, wobei die A- und B-Werte, wie oben erläutert, eine Verschiebung der Resonanzfrequenz und die Veränderung der Breite beschreiben. Die in Fig. 3 eingetragenen Regressionsgeraden zeigen für SAP eine Wert $tan(\varphi_1)$ = 0,388, während der Wert für $tan(\varphi_2)$ für Zellulose 0,2636 beträgt.

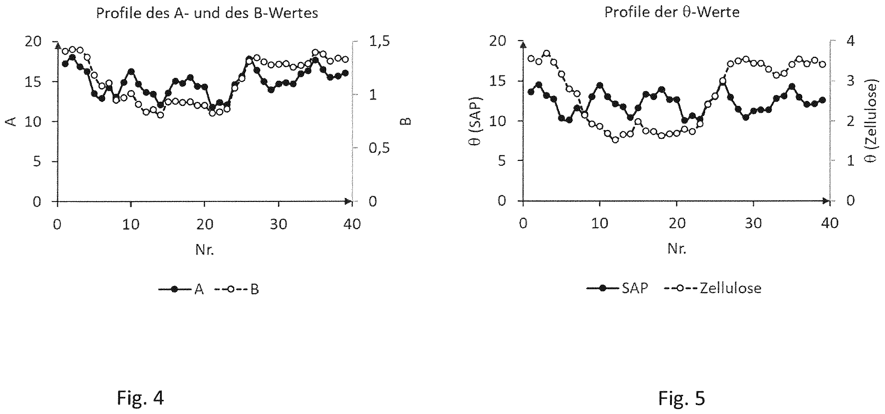

In Fig. 4 sind die A- und B-Werte eines Windelkerns entlang seinem Profil dargestellt, wobei in dem Windelkern das Zellulosevlies mit SAP bestreut ist. Mit Hilfe der Steigung der Regressionsgeraden können die jeweils gemessen A-, B-Werte in die Skalarfaktoren $\theta1$ und $\theta2$ umgerechnet werden.

Fig. 5 zeigt das gleiche Profil, diesmal jedoch für die Skalarfaktoren $\theta1$, $\theta2$ aufgetragen. Im Vergleich zu den A-, B-Werten ist bereits zu erkennen, dass insbesondere in dem Abschnitt von 10 bis 22 die Zellulose sich deutlicher von den $\theta$-Werten für SAP unterscheidet.

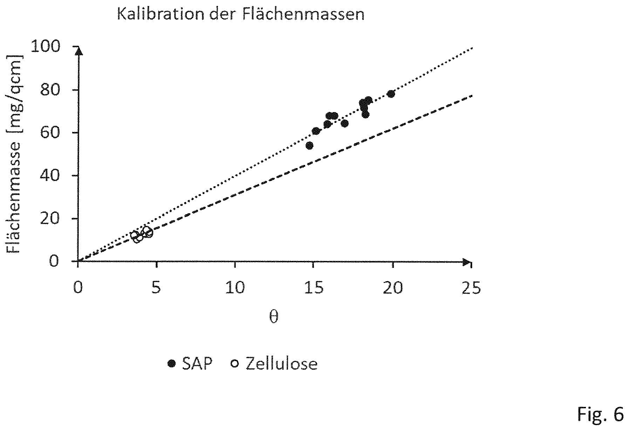

Fig. 6 zeigt die Kalibration des Flächenmaßes, wobei hier eine temperaturunabhängige Kalibration vorgenommen wurde. Bei der Kalibration wird dem gewonnenen $\theta$-Wert mit einem linearen Ansatz eine Flächenmasse in Milligramm pro cm$^2$ zugeordnet. Für die Gleichung

$$m_i = \alpha_i \cdot \theta_i + \beta_i,$$

ergeben sich die folgenden Parameterwerte:

- $$\alpha_{SAP} = 3,9 \ mg/qcm; \qquad\qquad \beta_{SAP} = 1 \ mg/qcm$$

- $$\alpha_{Zellulose} = 3,1 \ mg/qcm; \qquad\qquad \beta_{Zellulose} = 0 \ mg/qcm.$$

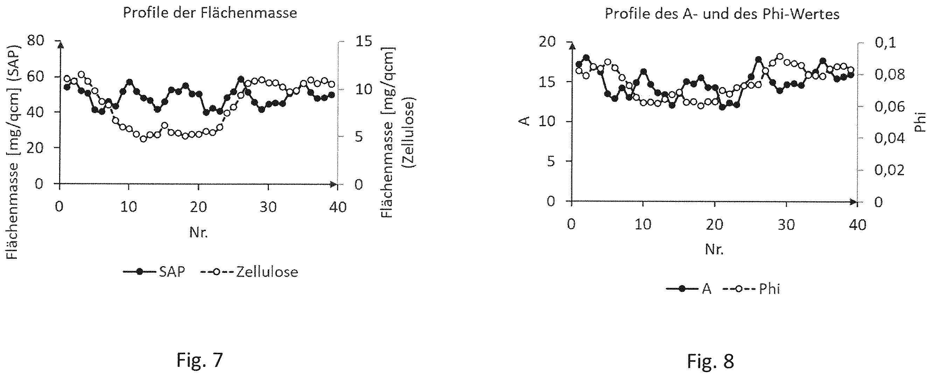

Mit Hilfe der so bestimmten Werte können die gemessenen A-, B-Werte über eine Umrechnung in die $\theta$-Werte direkt in eine Flächenmasse umgerechnet werden. Für das dargestellte Profil ergibt sich der in Fig. 7 gezeigte Verlauf für die Flächenmasse von SAP und Zellulose. Deutlich zu erkennen ist, dass die Flächenmasse für SAP sich im Wesentlichen gleichmäßig über das Profil erstreckt, während die Zellulose im Bereich von 10 bis 22 eine deutlich niedrigere Flächenmasse besitzt.

Zum Vergleich sei auf das Profil der A- und B-Werte in Fig. 4 verwiesen oder auf den klassischen Mikrowellen-Feuchtewert $\varphi$ in Fig. 8. Wie unschwer zu erkennen, ist der Feuchtewert $\varphi$ kein geeignetes Maß, um die beiden Stoffanteile unabhängig voneinander zu messen. Insbesondere der charakteristische niedrigere Zellulose-Anteil in einem Abschnitt ist dem Filterprofil in Fig. 4 und Fig. 8 nicht zu entnehmen.

**Patentansprüche**

1. Verfahren zur Messung von Stoffmengen ($m_1$, $m_2$) in einem Stoffgemisch mit zwei Stoffen ($M_1$, $M_2$):

   ◦ Bestimmen eines ersten Feuchtewerts ($\varphi_1$) für einen ersten der zwei Stoffe ($M_1$) und Bestimmen eines zweiten Feuchtewerts ($\varphi_2$) für den zweiten der zwei Stoffe ($M_2$) unter Verwendung eines Mikrowellenresonators,
   ◦ Messen von zwei Messwerten (A, B) für das Stoffgemisch unter Verwendung eines Mikrowellenresonators, wobei einer der zwei Messwerte (A) für eine Resonanzfrequenzverschiebung und ein anderer Messwert (B) für eine Resonanzkurvenbreitenveränderung steht,
   ◦ Berechnen von zwei Skalarfaktoren ($\theta_1$, $\theta_2$) für zwei Feuchtevektoren ($\vec{e_1}$, $\vec{e_2}$) aus den zwei Messwerten (A, B) für das Stoffgemisch, wobei die Feuchtevektoren ($\vec{e_1}$, $\vec{e_2}$) in einer Ebene der Messwerte (A, B) unter Verwendung von dem ersten und zweiten Feuchtewert ($\varphi_1$, $\varphi_2$) jeweils die Richtung einer Geraden gleicher Feuchte für den ersten und den zweiten Stoff ($M_1$, $M_2$) angeben,
   ◦ Bestimmen der Stoffmengen ($m_1$, $m_2$) in dem Stoffgemisch aus den Skalarfaktoren ($\theta_1$, $\theta_2$).

**2.** Verfahren nach Anspruch 1, **dadurch gekennzeichnet, dass** das Bestimmen der Stoffmengen ($m_1$, $m_2$) abhängig von den Skalarfaktoren ($\theta_1$, $\theta_2$) und einer Temperatur (T) des Stoffgemischs erfolgt.

**3.** Verfahren nach Anspruch 1 oder 2, **dadurch gekennzeichnet, dass** ein Zusammenhang der Stoffmengen ($m_1$, $m_2$) mit den Skalarfaktoren ($\theta_1$, $\theta_2$) aus einer Vielzahl an Messungen für das Stoffgemisch bestimmt wird.

**4.** Verfahren nach Anspruch 3, **dadurch gekennzeichnet, dass** der Zusammenhang der Stoffmengen ($m_1$, $m_2$) mit den Skalarfaktoren ($\theta_1$, $\theta_2$) dahingehend besteht, dass die Stoffmenge des ersten Stoffs abhängt von dem Skalarfaktor ($\theta_1$) des Feuchtewerts des ersten Stoffs ($M_1$) und die Stoffmenge des zweiten Stoffs abhängig von dem Skalarfaktor ($\theta_2$) des Feuchtewerts des zweiten Stoffs ($M_2$).

**5.** Verfahren nach einem der Ansprüche 1 bis 4, **dadurch gekennzeichnet, dass** die Skalarfaktoren ($\theta_1$, $\theta_2$) aus einer Vielzahl von Einzelmessungen der jeweiligen Stoffe bestimmt werden.

**6.** Verfahren nach einem der Ansprüche 1 bis 5, **dadurch gekennzeichnet, dass** das Bestimmen der Feuchtewerte ($\varphi_1$, $\varphi_2$) für die beiden Stoffe ($M_1$, $M_2$) erfolgt vorab in einem Kalibrationsschritt.

**7.** Verfahren nach einem der Ansprüche 1 bis 6, **dadurch gekennzeichnet, dass** mindestens ein weiteres Messsystem vorgesehen ist, das einen Stoff vor der Vermischung mit dem anderen Stoff misst.

**8.** Verfahren nach Anspruch 7, **dadurch gekennzeichnet, dass** zwei weitere Messsysteme (12, 16) vorgesehen sind, die jeweils einen Feuchtewert für einen Stoff messen.

**9.** Verfahren nach Anspruch 7 oder 8, **dadurch gekennzeichnet, dass** der oder die Feuchtewerte des weiteren Messsystems umskaliert werden, wobei Parameter für die Umskalierung kalibriert werden.


**Claims**

**1.** A method for measuring substance quantities ($m_1$, $m_2$) in a substance mixture with two substances ($M_1$, $M_2$):

> o determining a first moisture value ($\varphi_1$) for a first of the two substances ($M_1$), and determining a second moisture value ($\varphi_2$) for the second of the two substances ($M_2$) using a microwave resonator,
> o measuring two measured values *(A, B)* for the substance mixture using a microwave resonator, wherein one of the two measured values (A) represents a resonance frequency shift, and another measured value (B) represents a resonance curve width change,
> o calculating two scalar factors ($\theta_1$, $\theta_2$) for two moisture vectors ($\vec{e_1}$, $\vec{e_2}$) from the two measured values *(A, B)* for the substance mixture, wherein the moisture vectors ($\vec{e_1}$, $\vec{e_2}$) each indicate the direction of a straight line of equal moisture for the first and second substance ($M_1$, $M_2$) in a plane of the measured values *(A, B)* using the first and second moisture value ($\varphi_1$, $\varphi_2$),
> o determining the substance quantities ($m_1$, $m_2$) in the substance mixture from the scalar factors ($\theta_1$, $\theta_2$).

**2.** The method according to claim 1, **characterized in that** the substance quantities ($m_1$, $m_2$) are determined depending on the scalar factors ($\theta_1$, $\theta_2$) and a temperature (T) of the substance mixture.

**3.** The method according to claim 1 or 2, **characterized in that** a correlation of the substance quantities ($m_1$, $m_2$) with the scalar factors ($\theta_1$, $\theta_2$) is determined from numerous measurements of the substance mixture.

**4.** The method according to claim 3, **characterized in that** the correlation of the substance quantities ($m_1$, $m_2$) with the scalar factors ($\theta_1$, $\theta_2$) is such that the substance quantity of the first substance depends on the scalar factor ($\theta_1$) of the moisture value of the first substance ($M_1$) and the substance quantity of the second substance depends on the scalar factor ($\theta_2$) of the moisture value of the second substance ($M_2$).

**5.** The method according to one of claims 1 to 4, **characterized in that** the scalar factors ($\theta_1$, $\theta_2$) are determined from numerous individual measurements of the particular substances.

**6.** The method according to one of claims 1 to 5, **characterized in that** the moisture values ($\varphi_1$, $\varphi_2$) for the two

substances ($M_1$, $M_2$) are determined beforehand in a calibration step.

7. The method according to one of claims 1 to 6, **characterized in that** at least one additional measuring system is provided that measures a substance before being mixed with the other substance.

8. The method according to claim 7, **characterized in that** two additional measuring systems (12, 16) are provided that each measure a moisture value of a substance.

9. The method according to claim 7 or 8, **characterized in that** the moisture value(s) of the additional measuring systems is/are rescaled, wherein parameters are calibrated for the rescaling.


**Revendications**

1. Procédé de mesures de quantités de substances ($m_1$, $m_2$) dans un mélange de substances comprenant deux substances ($M_1$, $M_2$) :

   o détermination d'une première valeur d'humidité ($\varphi_1$) pour une première parmi les deux substances ($M_1$) et détermination d'une deuxième valeur d'humidité ($\varphi_2$) pour la deuxième parmi les deux substances ($M_2$), à l'aide d'un résonateur à microondes,
   o mesure de deux valeurs de mesure *(A, B)* pour le mélange de substances à l'aide d'un résonateur à microondes, dans lequel l'une des deux valeurs de mesure (A) représente un décalage de fréquence de résonance et une autre valeur de mesure (B) représente un changement de largeur de courbe de résonance,
   o calcul de deux facteurs scalaires ($\theta_1$, $\theta_2$) pour deux vecteurs d'humidité ($\vec{e_1}$, $\vec{e_2}$) à partir des deux valeurs de mesure *(A, B)* pour le mélange de substances, dans lequel les vecteurs d'humidité ($\vec{e_1}$, $\vec{e_2}$) indiquent respectivement la direction d'une droite d'humidité égale pour la première et la deuxième substance ($M_1$, $M_2$) dans un plan des valeurs de mesure (A, B) à l'aide de la première et de la deuxième valeur d'humidité ($\varphi_1$, $\varphi_2$),
   o détermination des quantités de substance ($m_1$, $m_2$) dans le mélange de substances à partir des facteurs scalaires ($\theta_1$, $\theta_2$).

2. Procédé selon la revendication 1, **caractérisé en ce que** la détermination des quantités de substance ($m_1$, $m_2$) est effectuée en fonction des facteurs scalaires ($\theta_1$, $\theta_2$) et d'une température ($T$) du mélange de substances.

3. Procédé selon la revendication 1 ou 2, **caractérisé en ce qu'**un rapport des quantités de substance ($m_1$, $m_2$) avec les facteurs scalaires ($\theta_1$, $\theta_2$) est déterminé à partir d'une pluralité de mesures pour le mélange de substances.

4. Procédé selon la revendication 3, **caractérisé en ce que** le rapport des quantités de substance ($m_1$, $m_2$) avec les facteurs scalaires ($\theta_1$, $\theta_2$) existe en ce sens que la quantité de substance de la première substance dépend du facteur scalaire ($\theta_1$) de la valeur d'humidité de la première substance ($M_1$) et la quantité de substance de la deuxième substance dépend du facteur scalaire ($\theta_2$) de la valeur d'humidité de la deuxième substance ($M_2$).

5. Procédé selon l'une des revendications 1 à 4, **caractérisé en ce que** les facteurs scalaires ($\theta_1$, $\theta_2$) sont déterminés à partir d'une pluralité de mesures individuelles des différentes substances.

6. Procédé selon l'une des revendications 1 à 5, **caractérisé en ce que** la détermination des valeurs d'humidité ($\varphi_1$, $\varphi_2$) pour les deux substances ($M_1$, $M_2$) est effectuée préalablement au cours d'une étape d'étalonnage.

7. Procédé selon l'une des revendications 1 à 6, **caractérisé en ce qu'**il est prévu au moins un autre système de mesure, lequel mesure une substance avant le mélange avec l'autre substance.

8. Procédé selon la revendication 7, **caractérisé en ce qu'**il est prévu deux autres systèmes de mesure (12, 16), lesquels mesurent respectivement une valeur d'humidité pour une substance.

9. Procédé selon la revendication 7 ou 8, **caractérisé en ce que** la ou les valeurs d'humidité de l'autre système de mesure sont remises à l'échelle, dans lequel des paramètres pour la remise à l'échelle sont étalonnés.

(a)                                                    (b)

Fig. 1

EP 4 264 242 B1

Fig. 2

EP 4 264 242 B1

Fig. 3

Profile des A- und des B-Wertes

Profile der θ-Werte

Fig. 4

Fig. 5

EP 4 264 242 B1

EP 4 264 242 B1

Fig. 6

Profile der Flächenmasse

Fig. 7

Profile des A- und des Phi-Wertes

Fig. 8

EP 4 264 242 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011006416